# EUROPÄISCHE PATENTANMELDUNG

(11) **EP 3 460 287 A1**
(43) Veröffentlichungstag der Anmeldung: **27.03.2019**
(21) Anmeldenummer: 17782737.5
(22) Anmeldetag: 29.03.2017
(51) Int. Cl.: F16F 15/30

(54) **BANDSCHWUNGRAD**

(30) Priorität: 12.04.2016 RU 2016114054
(71) Anmelder: KEST GMBH, 40882 Ratingen (DE)
(72) Erfinder: ZOTOV, Alexey Vyacheslavovich, Moscow, 119602 (RU)
(74) Vertreter: Schneiders & Behrendt PartmbB Rechtsanwälte - Patentanwälte
(86) Internationale Anmeldenummer: PCT/RU2017/050020
(87) Internationale Veröffentlichungsnummer: WO 2017/180027

(57) **Zusammenfassung**

Die Erfindung betrifft ein Band-Schwungrad und soll es ermöglichen, die Betriebsdrehzahl, die Zuverlässigkeit und die Sicherheit eines solchen Band-Schwungrades zu erhöhen. Der angegebene technische Erfolg wird dadurch erzielt, dass an einem Band-Schwungrad mit
-einem Scheibenkörper (1),
- einem außen an dem Scheibenkörper (1) angeordneten elastischen Ring (4) und
- einem außerhalb des elastischen Ringes (4) angeordneten Schwungradkranz (6) aus miteinander verbundenen Windungen eines aufgewickelten Bandes
-der Scheibenkörper (1) als flache Scheibe mit einer zylindrischen Außenfläche mit einer darin angeordneten Nut ausgestaltet wird,
-der elastische Ring (4) mit einem T-förmigen Querschnitt versehen und in der Nut fixiert wrid
-und der obere Kopfteil des T-förmigen Querschnittes die gleiche Breite wie der Scheibenkörper 1 und die durch Klebeschichten miteinander verbundenen inneren Windungen des Bandes des Schwungradkranzes (1)erhält.

## Beschreibung

Die Erfindung bezieht sich auf den Bereich des Maschinenbaus und kann in verschiedenen Industriebereichen, insbesondere in der Energieversorgung eingesetzt werden.

Ein bekanntes Band-Schwungrad weist einen elastischen Zentralkörper mit zylindrischer Umfangsfläche auf, auf welche von außen in einer Vielzahl von aufeinanderfolgenden Windungen eines breiten Bandes und nachfolgend eines schmalen Bandes aufgewickelt sind, deren Oberflächen durch Klebstoff miteinander verbunden sind, wobei die Klebstoffschicht zwischen der zylindrischen Umfangsfläche des elastischen Zentralkörpers und den sich anschließenden Oberflächen des breiten und des schmalem Bandes im Übergangsbereich zwischen dem breiten Band und dem schmalen Band unterbrochen ist.(RU 133 233 U1; F16F15/30;veröff. 10.10.2013)

Um zu vermeiden, dass das breite und das schmale Band seitlich vom elastischen Zentrum abfallen, sind Seitenbacken vorgesehen, die sich auf beiden Seiten des elastischen Zentralkörpers befinden und es ermöglichen, das breite und das schmale Band in Position zu halten.

Der Nachteil dieser Vorrichtung besteht darin, dass der elastische Zentralkörper, welcher einen verhältnismäßig großen Durchmesser hat, bei hoher Drehzahl des Schwungrades in seinem mittleren Teil instabil ist und zerstört wird, was bei Zerstörungsprüfungen festgestellt worden ist.

Der Erfindung am nächsten kommt ein Band-Schwungrad bestehend aus einer Scheibe, einem die Scheibe von außen umgebenden elastischen Ring und einem den Ring von außen umgebenden Schwungradkranz aus miteinander verbundenen Windungen eines aufgewickelten Bandes. (SU 2 00 359; F06C, veröff. am 1.1.1967)

Bei dieser Anordnung ist der elastische Ring im Querschnitt U-förmig ausgebildet und beispielsweise mit Hilfe von Bolzen außen an der Scheibe befestigt, welche eine zur Peripherie hin enger werdende Wanddicke hat, wobei die letzte Windung des Bandes des Schwungradkranzes nahe dem Ende des Bandes nicht fixiert ist und ist und lokal eine geschwächten Querschnitt, beispielsweise in Form eines Loches aufweist.

Der Nachteil dieser Vorrichtung ist die geringe Bruchfestigkeit des U-förmigen elastischen Ringes bei hoher Drehzahl des Schwungrades. Der U-förmige, elastische Ring ist vollständig außerhalb der Scheibe angeordnet, und zwar an deren zylindrischen Umfangsfläche und teilweise von der Seite her anliegend.

Es ist Aufgabe der Erfindung, die technischen und betrieblichen Merkmale eines solchen Band Schwungrades zu verbessern. Der technische Erfolg, der durch die beanspruchte Erfindung erzielt werden soll, ist die Erhöhung der Betriebsdrehzahl sowie eine Steigerung der Zuverlässigkeit und Sicherheit der gesamten Vorrichtung.

Um diese Aufgabe zu lösen und um das genannte technische Ergebnis bei einem bekannten Band- Schwungrad zu erreichen, welches einen zentralen Scheibenkörper, einen den Scheibenkörper umgebenden elastischen Ring und einen den elastischen Ring umgebenden Schwungradkranz aufweist, der aus miteinander und mit dem elastischen Ring verklebten Windungen eines Bandes besteht, ist nach der Lehre der Erfindung vorgesehen, dass der Scheibenkörper eine zylindrische Mantelfläche und eine darin angeordnete, umlaufende Nut aufweist und dass der elastische Ring einen T- förmigen Querschnitt aufweist, wobei der Steg des T-förmigen Querschnittes in der Nut des Scheibenkörpers fixiert ist und der Kopf des T-förmigen Querschnittes die gleiche Breite wie die Mantelfläche des Scheibenkörpers und die innere Windung des Bandes des Schwungradkranzes hat.

Vorteilhafte Ausführungsformen des Schwungrades sehen vor,
- dass der elastische Ring in der Nut des Scheibenkörpers durch eine Klebstoffschicht und/oder Nieten fixiert ist;
- dass die Höhe des T-Querschnittes des elastischen Ringes 1/5-1/20 vom Radius des Scheibenkörpers beträgt;
- dass der elastische Ring aus Polyurethan besteht;
- und dass am äußeren Umfang des Schwungradkranzes auf dem Band des Schwungradkranzes eine oder mehrere miteinander verklebte Windungen eines schmaleren Bandes angeordnet sind, wobei die Verklebung im Bereich des Überganges vom breiteren zum schmaleren Band unterbrochen ist.

Die oben genannten Merkmale der Erfindung sind wesentlich und stehen in einem Ursache-Wirkung-Zusammenhang für die Erreichung der angestrebten technischen Ergebnisse, insbesondere zur Erhöhung der Betriebsdrehzahl sowie der Steigerung der Zuverlässigkeit und Sicherheit der gesamten Vorrichtung.

Die Vorteile der Erfindung und ihre Merkmale werden nachfolgend anhand eines Ausführungsbeispieles unter Bezugnahme auf die beigefügte Zeichnung näher erläutert:

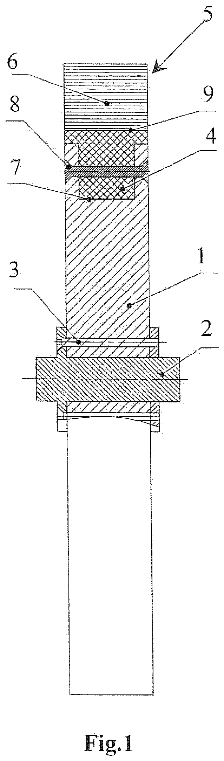

Figur 1 zeigt schematisch einen Querschnitt durch das angemeldete Band-Schwungrad.

Das Band-Schwungrad (Figur 1) weist einen Scheibenkörper 1 auf, der auf einer Welle 2 sitzt und dort mit bekannten Mitteln, zum Beispiel mittels Schraubenbolzen 3 zentriert befestigt ist und von einem elastischen Ring 4 umgeben wird, der sich. teilweise außerhalb des Scheibenkörpers befindet und mit diesem verbunden ist. Außen an dem elastischen Ring 4 ist ein Schwungradkranz 5 befestigt, der von einer Vielzahl von miteinander verbundenen Windungen eines Bandes gebildet wird. Der Scheibenkörper 1 ist als flache Zylinderscheibe ausgebildet, die an ihrer zylindrischen Außenfläche mit einer umlaufenden Nut versehen ist. Der elastische Ring 4 hat einen T-förmigen Querschnitt ist und ist mit dem Steg des T-Querschnittes in der Nut fixiert. Der Kopf - obere Teil des T-Querschnittes - hat die gleiche Breite wie der Scheibenkörper 1 und die durch Klebeschichten 6 miteinander verbundenen innere Windungen des Bandes des Schwungradkranzes 5.

Der elastische Ring 4 ist in der Nut mittels einer Klebstoffschicht 7 oder mittels Nieten 8 befestigt.

Versuche haben ergeben, dass das Höhenmaß des T-Querschnittes des elastischen Ringes 4 im Bereich zwischen einem Fünftel und einem Zwanzigstel des Radius des Scheibenkörpers 1 liegen sollte.

Der elastische Ring 4 kann aus Polyurethan hergestellt sein.

Um -bei Überlastung des Band-Schwungrades - den rechtzeitigen Abriss der äußersten Windungen und des Schwungradkranzes 5 sicherzustellen, kann- (in Figur1 nicht dargestellt und analog zur Lehre der Druckschrift RU 133 233 U1)-außen auf das breite Band des Schwungradkranzes 5 ein schmaleres Band gewickelt werden, welches eine gewickelte Schicht bildet, wobei die Verklebung im Bereich des Überganges vom breiteren Band zum schmaleren Band unterbrochen ist.

Das Band-Schwungrad gemäß Figur 1 arbeitet wie folgt:
Das Band-Schwungrad weist die Welle 2 auf, auf welcher der in Bezug auf die Welle korrekt zentrierte Scheibenkörper 1 sitzt. Die Welle 2 überträgt mithilfe von bekannten Mitteln, beispielsweise mithilfe der Schrauben 3, ein Drehmoment auf den Scheibenkörper 1. Der Scheibenkörper 1 hat einen zylindrischen Umfangsbereich, in dessen äußerer zylindrische Oberfläche eine Nut angeordnet ist, in welcher der T-förmige, elastische Ring 4 befestigt ist. Der elastische Ring 4 kann in der Nut auf verschiedene Art und Weise festgelegt werden, beispielsweise durch eine Klebeverbindung 7 und/oder durch Nieten 8. Dies ist notwendig im Hinblick auf die Drehmomentübertragung und die richtige Position des elastischen Ringes 4 bei Rotation des Band-Schwungrades.

Auf den außenliegenden, zylindrischen Teil des elastischen Ringes 4 wird eine Klebeschicht 9 aufgebracht und das durch Klebstoffschichten 6 verbundene hochfeste Band gewickelt, welches als energiespeichernder Hauptteil des Band-Schwungrades dient.

Bei Rotation des Band-Schwungrades kommt es zu einer elastischen Durchmesservergrößerung aufgrund von Zugspannungen in dem durch die Klebstoffschichten 6 verbundenen Bandmaterial. Wenn für den Scheibenkörper 1 ein Material mit hohem Elastizitätsmodul verwendet wird, vergrößert sich dessen Durchmesser wesentlich weniger, als der des Schwungradkranzes 5. Zur Verbindung des Scheibenkörpers 1 mit dem aus dem Band und den Klebstoffschichten 6 hergestellten Schwungradkranz 5 dient der beispielsweise aus Polyurethan hergestellte elastische Ring 4. Bei der Rotation verliert dieser elastische Ring 4 die Verbindung mit dem Scheibenkörper 1 infolge der Klebeschicht 7 und der Nieten 8 nicht. Dabei ist der Elastizitätsmodul des Materials des elastischen Ringes 4 so gewählt, dass eine garantierte Verbindung mit dem Schwungradkranzes 5 erhalten bleibt. Diese Maßnahmen stellen im Ergebnis eine ordnungsgemäße Zentrierung des durch die Klebstoffschichten 6 zusammengehaltenen Bandes sicher.

Somit können die Härte und dementsprechend der Elastizitätsmodul des für den elastischen Ring 4 verwendeten Polyurethans bei bestimmten Massen der Scheibe 1 und des Schwungradkranzes 5 die bei Betriebsdrehzahl in der Radebene des Scheibenkörpers1 auftretende Schwingungsfrequenz niedriger als die Resonanzfrequenz halten.

Der elastische Ring 4 hat eine Dämpfungsfunktion, die im Falle des Auftretens von Resonanzphänomenen nicht zulässt, dass sich eine gefährliche Schwingungsamplitude entwickelt. Wie Prüfungen gezeigt haben, kann hierdurch die Betriebsdrehzahl ohne Zerstörung des elastischen Ringes erhöht werden und zugleich die Zuverlässigkeit und Sicherheit der gesamten Vorrichtung verbessert werden.

Das Band-Schwungrad ist am besten im Energiesektor zum Ausgleich von Leistungsspitzen gewerblich einsetzbar.

## Patentansprüche

1. Band-Schwungrad mit einem zentralen Scheibenkörper (1), einem den Scheibenkörper (1) umgebenden elastischen Ring (4) und einem den elastischen Ring(4) umgebenden Schwungradkranz (5), der aus miteinander und mit dem elastischen Ring (4) verklebten Windungen eines Bandes besteht,
**dadurch gekennzeichnet,**
- **dass** der Scheibenkörper (1) eine zylindrische Mantelfläche und eine darin angeordnete, umlaufenden Nut aufweist und
- **dass** der elastische Ring (4) einen T-förmigen Querschnitt aufweist, wobei der Steg des T- förmigen Querschnittes in der Nut des Scheibenkörpers (1) fixierbar ist und der Kopf T-förmigen Querschnittes die gleiche Breite wie die Mantelfläche des Scheibenkörpers (1) und die innere Windung des Bandes des Schwungradkranzes (5) hat.

2. Band-Schwungrad nach Patentanspruch 1, **dadurch gekennzeichnet, dass** der elastische Ring (4) in der Nut des Scheibenkörpers (1) durch eine Klebstoffschicht (7) und/oder Nieten (8) fixiert ist.

3. Band-Schwungrad nach Patentanspruch 1, **dadurch gekennzeichnet, dass** das Höhenmaß des T-Querschnittes des elastischen Ringes (4) 1/5 bis 1/20 des Radius des Scheibenkörpers (1) beträgt.

4. Band-Schwungrad nach Patentanspruch 1, **dadurch gekennzeichnet, dass** der elastische Ring (4) aus Polyurethan besteht.

5. Band-Schwungrad nach Patentanspruch 1, **dadurch gekennzeichnet, dass** am äußeren Umfang des Schwungradkranzes (5) eine oder mehrere miteinander verklebte Windungen eines schmaleren Bandes angeordnet sind, wobei die Verklebung im Bereich des Überganges vom breiteren Band zum schmaleren Band unterbrochen ist.
